# EUROPEAN PATENT APPLICATION

(11) **EP 2 574 012 A1**
(43) Date of publication of application: **27.03.2013**
(21) Application number: 11783475.4
(22) Date of filing: 16.05.2011
(51) Int. Cl.: H04L 29/14, G06F 13/38, H04L 12/40

(54) **BUS CONTROL DEVICE AND BUS CONTROL METHOD**

(30) Priority: 21.05.2010 JP 2010117400
(71) Applicant: NEC Corporation, Tokyo 108-8001 (JP)
(72) Inventor: TAZAKI Yuichi, Tokyo 108-8001 (JP)
(74) Representative: Glawe, Delfs, Moll
(86) International application number: PCT/JP2011/061136
(87) International publication number: WO 2011/145541

(57) **Abstract**

An exemplary object is to make it possible to prompt notify a master-end control unit of failure information of a controlled device in a bus control apparatus that employs a structure in which a master-end circuit part is connected to a slave-end circuit part through a serial bus. A master circuit equipped with a control unit generates an access message for access to a control target equipped with a slave circuit, and transmits the access message to the slave circuit connected to the master circuit through a bus. The slave circuit collects information on the control target, generates a response message to the access message, generates an information message based on the information on the control target, and transmits the response message and the information message to the master circuit. If generation of the response message conflicts with generation of the information message, the slave circuit generates the information message, with a higher priority given to the generation of the information message.

## Description

### TECHNICAL FIELD

The present invention relates to a bus control apparatus which is configured such that master-end circuit parts equipped with a host central processing unit (CPU) are connected to slave-end circuit parts equipped with controlled devices through a back wiring board and they communication with each other through serial buses, and to a bus control method.

### BACKGROUND ART

An information processing apparatus such as a network apparatus is configured such that master-end circuit parts equipped with a host CPU are connected to slave-end circuit parts equipped with controlled devices through a back wiring board and they communicate with each other through serial buses in which transmission and reception are physically separated. In such a configuration, messages are transmitted and received between the circuit parts equipped with the host CPU and the plurality of circuit parts equipped with the controlled devices through the serial buses, and the host CPU indirectly accesses the controlled devices.

In addition, Patent Document 1 relates to a supervisory control scheme in a system having a plurality of modules, and discloses centralized supervisory and control of the respective modules. The Patent Document 1 also discloses hierarchical bus conversion between the modules.

### Prior Art Document

### Patent Document

Patent Document 1: Japanese Unexamined Patent Application, First Publication No. H5-250344

### SUMMARY OF INVENTION

### Problems to be solved by the Invention

In an information processing apparatus, if a failure occurs in a controlled device, after receiving notification of the occurrence of the failure, a host CPU reads a failure information storage area of the relevant device which is subordinate to a control bus, and collects failure information. However, in the above-described configuration in which the master-end circuit parts equipped with the host CPU are connected to the slave-end circuit parts equipped with the controlled devices through the serial buses, it is necessary to generate a message when the failure information storage area is read. For this reason, there is a problem in that it takes much time to acquire the failure information through the serial buses. Moreover, in Patent Document 1, since failure data is attached to response data, it is not possible to promptly acquire the failure information.

In view of the above-described problems, an exemplary object of the present invention is to provide a bus control apparatus and a bus control method which can promptly notify the host CPU of information on the controlled devices using the configuration in which the master-end circuit parts equipped with the host CPU are connected to the slave-end circuit parts equipped with the controlled devices through the serial buses.

### Means for Solving the Problems

In order to solve the above-described problems, a bus control apparatus in accordance with the present invention includes: a master circuit which is equipped with a control unit; a slave circuit which is equipped with a control target and performs a message communication with the master circuit; and a bus which connects the master circuit to the slave circuit, wherein the master circuit includes: a master-end message generation unit which generates an access message for access to the control target; and a master-end transmission unit which transmits the access message to the slave circuit, the slave circuit includes: a collection unit which collects information on the control target; a slave-end message generation unit which generates a response message to the access message and an information message based on the information on the control target; and a slave-end transmission unit which transmits the response message and the information message to the master circuit, and if generation of the response message conflicts with generation of the information message, the slave-end message generation unit generates the information message, with a higher priority given to the generation of the information message.

A bus control method in accordance with the present invention includes: in a master circuit which is equipped with a control unit, generating an access message for access to a control target which is equipped in a slave circuit which is connected to the master circuit through a bus, and transmitting the access message to the slave circuit; in the slave circuit, collecting information on the control target, generating a response message to the access message, generating an information message based on the information on the control target, and transmitting the response message and the information message to the master circuit; and, in the slave circuit, if generation of the response message conflicts with generation of the information message, generating the information message, with a higher priority given to the generation of the information message.

### Exemplary Effects of the Invention

In accordance with the present invention, if a failure occurs in a control target equipped in a slave circuit, the slave circuit autonomously generates a failure information message and notifies a master circuit of the failure information message through a bus. If generation of a response message to an access message conflicts with generation of the failure information message, the slave circuit generates the failure information message, with a higher priority given to the generation of the failure information message. As a result, a control unit equipped in the master circuit can promptly acquire failure information of the slave circuit and reduce the time required for a failure process.

### BRIEF DESCRIPTION OF DRAWINGS

FIG. 1 a block diagram illustrating a configuration of a bus control apparatus in accordance with a first exemplary embodiment of the present invention.
FIG. 2 is a diagram describing a transfer format in the bus control apparatus in accordance with the first exemplary embodiment of the present invention.
FIG. 3 is a block diagram used for describing a conflict control function in the bus control apparatus in accordance with the first exemplary embodiment of the present invention.

### MODES FOR CARRYING OUT THE INVENTION

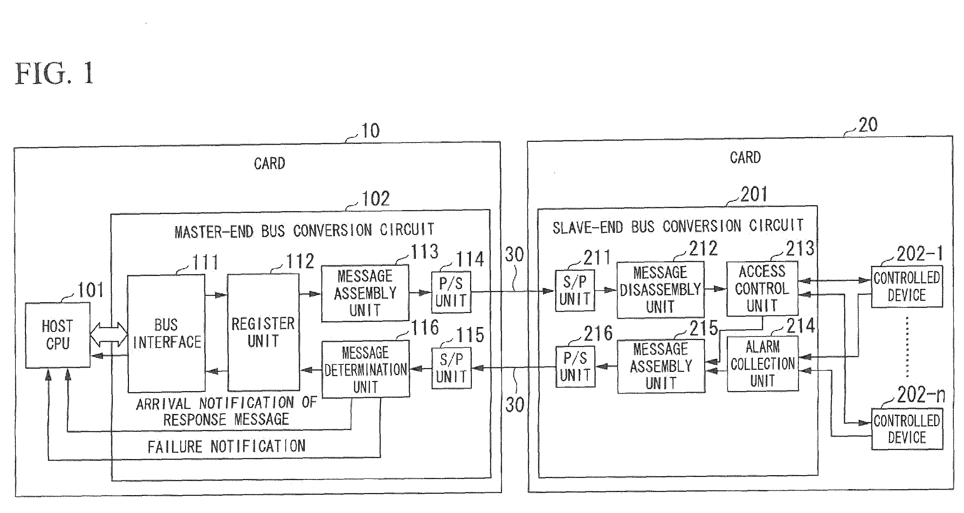

Hereinafter, exemplary embodiments of the present invention will be described with reference to the drawings. FIG. 1 is a block diagram illustrating a configuration of a bus control apparatus in accordance with a first exemplary embodiment of the present invention.

In FIG. 1, a card 10 (master circuit) is a circuit part equipped with master-end electronic circuits including a host central processing unit (CPU) (control unit) 101.
A card 20 (slave circuit) is a circuit part equipped with slave-end electronic circuits including controlled devices 202-1 to 202-n (control targets). The controlled devices 202-1 to 202-n are devices such as an electrically erasable and programmable read only memory (EEPROM), a framer, or the like.
The card 10 and the card 20 are connected through a back wiring board (not shown in the drawings), and they transmit and receive messages through serial buses 30 to perform access.

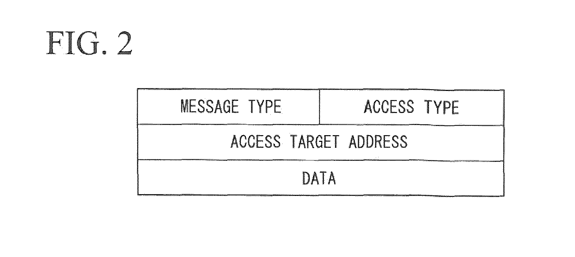

FIG. 2 is a diagram describing a transfer format in the bus control apparatus in accordance with the first exemplary embodiment of the present invention.
In communications using the serial buses 30, transmission and reception of data are physically separated. That is, the serial buses 30 are provided with separate lines including a line used for transmitting messages from the card 10 to the card 20 and a line used for transmitting messages from the card 20 to the card 10. Messages having the format as shown in FIG. 2 are transmitted and received between the card 10 and the card 20 through the serial buses 30.

As shown in FIG. 2, a message includes a message type field, an access type field, an access target address field, and a data field.
The message type field stores an identifier indicating whether the message is a read message, a write message, or a failure information message.
The access type field stores a type indicating whether access by the message is single access or burst access.
The access target address field stores an address on which reading or writing is performed. It is to be noted that when burst access is specified, this address is the top address of the burst access.
In the case of write access, the data field stores data to be written in a specified address, in the case of read access, the data field stores data read from a specified address, and in the case of failure notification, the data field stores information on a failure.

A master-end bus conversion circuit 102 is provided in the card 10. The master-end bus conversion circuit 102 is a circuit for performing bus conversion between the host CPU 101 and the serial buses 30, and it is provided with a physical signal conversion function and a function of generating a message to be output to the card 20 through the serial bus 30.

The master-end bus conversion circuit 102 includes a bus interface 111, a register unit 112 (storage unit), a message assembly unit 113 (master-end message generation unit), a parallel/serial (P/S) unit 114 (master-end transmission unit), a serial/parallel (S/P) unit 115, and a message determination unit 116.

The bus interface 111 is an interface between the host CPU 101 and the master-end bus conversion circuit 102. The bus interface 111 performs germination of a control bus (a peripheral component interconnect (PCI) bus or the like) provided in the host CPU 101, and interfaces with the register unit 112.

The register unit 112 stores data for generating an access message that allows for the host CPU 101 to access the card 20 through the serial buses 30. In addition, the register unit 112 stores data included in a response message from the message determination unit 116 for each type of response message. Herein, the response message refers to a message indicating a response to writing/reading among messages received from the card 20.

The message assembly unit 113 generates a message having a format that can be transferred on the serial bus 30 using information on access to the card 20 that is set in the register unit 112 (an access target address, a read/write type, and write data in the case of writing) as shown in FIG. 2.

The P/S unit 114 converts parallel data used for transmission within the card 10 into serial data used for transmission through the serial bus 30 with respect to the message generated by the message assembly unit 113, and outputs the converted serial data to the serial bus 30.

The S/P unit 115 converts serial data of a message received from the card 20 through the serial bus 30 into parallel data, and outputs the converted parallel data to the message determination unit 116.

The message determination unit 116 determines whether the message received from the card 20 is a response message indicating a response to writing/reading or a failure information message. In addition, when the message received from the card 20 is a response message, the message determination unit 116 also identifies whether it is a response to the writing or a response to the reading. Moreover, depending on the content of the message received from the card 20, the message determination unit 116 outputs a write response, a read response (read data), or failure notification information to the register unit 112, and separately notifies the host CPU 101 of arrival of the response message or arrival of the failure information message.

A slave-end bus conversion circuit 201 is provided in the card 20. The slave-end bus conversion circuit 201 interfaces with the master-end bus conversion circuit 102 through the serial buses 30, and analyzes and disassembles an access message generated by the master-end bus conversion circuit 102. Herein, the disassembly of a message refers to a process of dividing a message received from the card 10 into a message type (reading/writing) and an access type (burst access/single access), which are stored in the message.
Then, the slave-end bus conversion circuit 201 accesses the subordinate controlled devices 202-1 to 202-n connected thereto depending on the message type disassembled from the message. Moreover, the slave-end bus conversion circuit 201 assembles a message from response data of the controlled devices 202-1 to 202-n, and outputs the assembled message to the master-end bus conversion circuit 102. Furthermore, the slave-end bus conversion circuit 201 collects failure information on failures that have occurred in the controlled devices 202-1 to 202-n, assembles a failure information message from the failure information, and outputs the failure information message to the master-end bus conversion circuit 102.

The slave-end bus conversion circuit 201 includes an S/P unit 211, a message disassembly unit 212, an access control unit 213, an alarm collection unit 214 (collection unit), a message assembly unit 215 (slave-end message generation unit), and a P/S unit 216 (slave-end transmission unit).

The S/P unit 211 converts serial data of a message transmitted from the card 10 through the serial bus 30 into parallel data.

The message disassembly unit 212 disassembles the access message transmitted from the card 10 to acquire bus access information, and notifies the access control unit 213 of the bus access information.

The access control unit 213 performs bus conversion and bus access based on the bus access information received from the message disassembly unit 212 in accordance with access schemes of the controlled devices 202-1 to 202-n (PCI bus or the like), and outputs the result of the access (information indicating normal completion of writing, or read data) to the message assembly unit 215.

The alarm collection unit 214 collects failure information on failures detected by the controlled devices 202-1 to 202-n, and outputs the collected failure information to the message assembly unit 215.

The message assembly unit 215 assembles a message for serial bus communication from the result of the access received from the access control unit 213 and the failure information from the alarm collection unit 214, and outputs the message for serial bus communication to the P/S unit 216, In addition, if the result of the access output by the access control unit 213 conflicts with the failure information output by the alarm collection unit 214, the message assembly unit 215 outputs the failure information to the P/S unit 216, with a higher priority given to the output of the failure information.

The P/S unit 216 is provided with a function of converting parallel data of a message generated by the message assembly unit 215 into serial data.

Next, an operation of the first exemplary embodiment of the present invention will be described.
In FIG. 1, when the host CPU 101 equipped in the card 10 controls the controlled devices 202-1 to 202-n equipped in the card 20, the host CPU 101 sets access information (the read/write type, the access target address, and the write data in the case of writhing) in the register unit 112 through the bus interface 111. Once the access information is set, the register unit 112 outputs the access information to the message assembly unit 113. When the access information is output from the register unit 112, the message assembly unit 113 generates an access message having the format shown in FIG. 2, and outputs the generated access message to the P/S unit 114. Subsequently, the P/S unit 114 converts parallel data of the access message into serial data so as to conform to a serial bus interface of the serial bus 30, and transmits the serial data of the access message to the serial bus 30. The access message is transmitted from the card 10 to the card 20 through the serial bus 30, and it is received by the S/P converting unit 211 of the card 20.

Upon receipt of the serial data of the access message from the card 10, the S/P unit 211 converts the received serial data into parallel data, and outputs the parallel data of the access message to the message disassembly unit 212. Upon receipt of the access message, the message disassembly unit 212 disassembles the received access message into an access type (reading/writing), an access target address, and access unit(s) (single access in the case of burst access). Then, if the access type indicates reading, the message disassembly unit 212 outputs a read instruction and an access target address to the access control unit 213, as access instruction. In contrast, if the access type indicates writing, the message disassembly unit 212 outputs a write instruction, an access target address, and write data to the access control unit 213, as an access instruction.

When the access control unit 213 acquires the access instruction from the message disassembly unit 212, the access control unit 213 performs read access or write access using the access schemes corresponding to the controlled devices 202-1 to 202-n. If the access to the controlled devices 202-1 two 202-n has ended normally, when the performed access is write access, the access control unit 213 outputs write completion notification to the message assembly unlit 215, and when the performed access is read access, the access control unit 213 outputs read data to the message assembly unit 215.

Upon receipt of the result of the access from the access control unit 213, the message assembly unit 215 assembles a response message indicating the result of the access, and outputs the assembled response message to the P/S unit 216. It is to be noted that if the access has ended normally, "reading" or "writing," is stored in the message type field shown in FIG. 2 of the message generated by the message assembly unit 215, and the access result (success or failure of writing, or read data that has been read from a specified address) is stored in the data field of the message generated by the message assembly unit 215.

In addition, the alarm collection unit 214 of the card 20 detects the presence or absence of a failure in the controlled devices 202-1 to 202-n by receiving interrupt notification from the controlled devices 202-1 two 202-n or by periodic access from the alarm collection unit 214 to the controlled devices 202-1 to 202-n. Then, if a failure is present, the alarm collection unit 214 outputs failure information indicating the failure to the message assembly unit 215.
If the message assembly unit 215 acquires the failures information from the alarm collection unit 214, the message assembly unit 215 generates a failure information message indicating the failure information. If the failure occurs, "failure information" is stored in the message type field shown in FIG. 2 of the message generated by the message assembly unit 215, and information on the failure is stored in the data field of the message generated by the message assembly unit 215.

The P/S unit 216 converts parallel data of the response message or the failure information message received from the message assembly unit 215 into serial data, and outputs the converted serial data to the serial bus 30. The response message or the failure information message is transmitted from the card 20 to the card 10 through the serial bus 3 0, and it is received by the S/P conversion unit 115 of the card 10.

Upon receipt of the message from the card 20, the S/P unit 115 converts serial data of the message into parallel data, and outputs the converted parallel data of the message to the message determination unit 116.

The message determination unit 116 determines whether the received message is a response message to writing/reading or a failure information message based on the message type field of the message acquired from the S/P unit 115. Furthermore, if the message returned from the card 20 is a response message, the message determination unit 116 identifies whether it is a response to writing or a response to reading.

If the received message is a response message to writing/reading, the message determination unit 116 stores the access result (success or failure of writing, or read data) stored in the data field of the message in the register unit 112. In contrast, if the received message is a failure information message, the message determination unit 116 stores the failure information stored in the data field of the message in the register unit 112.

Then, depending on the content of the message received from the card 20, the message determination unit 116 outputs a write response, a read response (read data), or failure notification information to the register unit 112, and notifies the host CPU 101 of arrival of the response message or arrival of the failure message separately.

If the notification from the message determination unit 116 indicates the result of write access, the host CPU 101 reads the result of the write access from the register unit 112 through the bus interface 111. On the one hand, if the notification from the message determination unit 116 indicates the result of read access, the host CPU 101 reads read data from the register unit 112 through the bus interface 111. On the other hand, if the notification from the message determination unit 116 indicates failure notification, the host CPU 101 reads failure information stored in the register unit 112 through the bus interface 111, and performs a failure process in accordance with the content of the failure information. More specifically, the failure process referred to herein includes, for example, disconnection of a card that has detected the failure, and switching from the card to a redundant card that has the same function as that of the card when the redundant card exists.

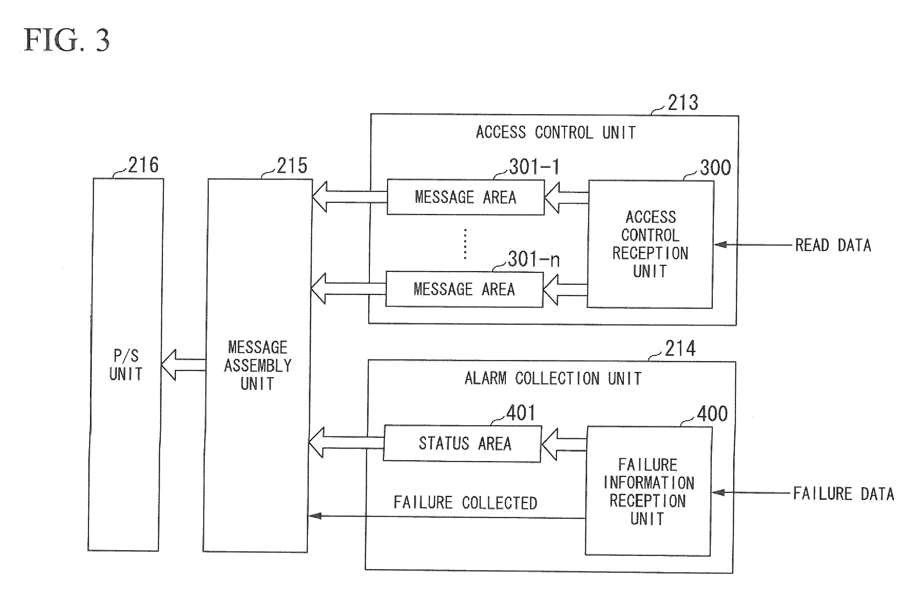

Next, the conflict control function performed by the message assembly unit 215 in the first exemplary embodiment of the present invention will be described with reference to FIG. 3.

As shown in FIG. 3, the access control unit 213 includes an access control reception unit 300 and message areas 301-1to 301-n for storing data read from the controlled devices 202-1 to 202-n.
The access control reception unit 300 receives the results of processing performed on the controlled devices 202-1 to 202-n and writes the received results of processing in the message areas 301-1 to 301-n, respectively.
The message areas 301-1 to 301-n store access responses. It is to be noted that in the case of burst access, a response of the burst access is converted into responses of single access, and the responses of the single access are stored in the message areas 301-1 to 301-n. For example, when the burst access is performed on *n* pieces of data, the response of the burst access is converted into *n* responses of single access, and the response data is stored in the *n* message areas 301 -1 two 301-n.

In addition, the alarm collection unit 214 includes a failure information reception unit 400 and a status area 401.
The failure information reception unit 400 receives the failure information from the controlled devices 202-1 to 202-n, and writes the received failure information in the status 401. In addition, upon receipt of the failure information, the failure information reception unit 400 outputs interruption information indicating the reception of the failure information to the message assembly unit 215.
The status area 401 stores the failure information.

The message assembly unit 215 controls conflict between the storage of data on the message areas 301-1 two 301-n of the access control unit 213 and the storage of data on the status area 401 of the alarm collection unit 214, and, if conflict occurs, gives a higher priority to the storage of data on the status area 401. As a result, if the message assembly unit 215 receives, from the failure information reception unit 400, the interruption information indicating that failure information has been collected while the message assembly unit 215 is receiving data from the message areas 301-1 to 301-n, the message assembly unit 215 stops reception from the message areas 301-1 to 301-n, receives the data from the status area 401, and generates a failure information message. When the message assembly unit 215 has completed generation of the failure information message and has output the failure information message to the P/S unit 216, the message assembly unit 215 receives the data from the message areas 301 -1 to 301-n again.

As described above, in the first exemplary embodiment of the present invention, the alarm collection unit 214 is provided in the card 20, and if the alarm collection unit 214 detects a failure in the controlled devices 202-1 to 202-n, the message assembly unit 215 autonomously generates a failure information message. The failure information message is transmitted from the card 20 to the card 10 through the serial bus 30, with a higher priority than that of a response message given to the failure information message, and information on the failure in the controlled devices is stored in the register unit 112. As a result, the host CPU 101 can detects the failure in the controlled devices by simply performing reading from the register unit 112 without accessing the card 20.

It is to be noted that the above-described exemplary embodiment transmits the failure information from the card 20 to the card 10, but the present invention can also be used in the case in which information other than the failure information is transmitted. For example, the present invention can also be used in transmitting information on a trouble and restoration of a line, information on the quality (a bit error or the like) of a line to the card 10. Even in this case, since the host CPU 101 can acquire the information by simply performing reading from the register unit 112, the host CPU 101 can reduce the processing time.

While the present invention has been particularly shown and described with reference to exemplary embodiments thereof, the present invention is not limited to these exemplary embodiments. It will be understood by those of ordinary skill in the art that various changes in form and details may be made therein without departing from the spirit and scope of the present invention as defined by the claims.

This application is based upon and claims the benefit of priority from Japanese Patent Application No. 2010-117400, filed on May 21, 2010, the disclosure of which is incorporated herein in its entirety by reference.

### INDUSTRIAL APPLICABILITY

The present invention can be used, for example, in a bus control apparatus which is configured such that master-end circuit parts equipped with a host CPU and slave-end circuit parts equipped with controlled devices communicate with each other through serial buses. In the present invention, the host CPU can promptly acquire failure information of a slave circuit and reduce the time required for a failure process.

### Description of Reference Symbols

10,20: cards
30: serial buses
101: host CPU
102: master-end bus conversion circuit
111: bus interface
112: register unit
113: message assembly unit
116: message determination unit
201: slave-end bus conversion circuit
202-1 to 202-n: controlled devices
212: message disassembly unit
213: access control unit
214: alarm collection unit
215: message assembly unit

## Claims

1. A bus control apparatus comprising:
a master circuit which is equipped with a control unit;
a slave circuit which is equipped with a control target and performs a message communication with the master circuit; and
a bus which connects the master circuit to the slave circuit,
wherein the master circuit comprises: a master-end message generation unit which generates an access message for access to the control target; and a master-end transmission unit which transmits the access message to the slave circuit,
the slave circuit comprised: a collection unit which collects information on the control target; a slave-end message generation unit which generates a response message to the access message and an information message based on the information on the control target; and a slave-end transmission unit which transmits the response message and the information message to the master circuit, and
if generation of the response message conflicts with generation of the information message, the slave-end message generation unit generates the information message, with a higher priority given to the generation of the information message.

2. The bus control apparatus according to claim 1, wherein the master circuit comprises a storage unit which retains a message received from the slave circuit, and
the control unit acquires the information on the control target based on the message retained in the storage unit.

3. The bus control apparatus according to claim 1 or claim 2, wherein the collection unit collects the information on the control target in accordance with interruption notification from the control target.

4. The bus control apparatus according to claim 1 or claim 2, wherein the collection unit collects the information on the control target by periodically accessing the control target.

5. The bus control apparatus according to any one of claim 1 to claim 4, wherein the collection unit outputs, to the slave-end message generation unit, interruption information indicating the information on the control target has been acquired, and
if the slave-end message generation unit receives the interruption information while the slave-end message generation unit is generating the response message, the slave-end message generation unit stops generation of the response message, generates the information message, and then generates the response message again.

6. A bus control method comprising:
in a master circuit which is equipped with a control unit, generating an access message for access to a control target which is equipped in a slave circuit which is connected to the master circuit through a bus, and transmitting the access message to the slave circuit;
in the slave circuit, collecting information on the control target, generating a response message to the access message, generating an information message based on the information on the control target, and transmitting the response message and the information message to the master circuit; and
in the slave circuit, if generation of the response message conflicts with generation of the information message, generating the information message, with a higher priority given to the generation of the information message.
